# EUROPEAN PATENT APPLICATION

(11) **EP 1 645 999 A1**
(43) Date of publication of application: **12.04.2006**
(21) Application number: 05108165.1
(22) Date of filing: 06.09.2005
(51) Int. Cl.: G06Q 10/00

(54) **Method and system for embedding user profile information in electronic messages**

(30) Priority: 16.09.2004 US 942276
(71) Applicant: Microsoft Corporation, Redmond WA 98052 (US)
(72) Inventor: Pearson, Malcolm E., 98052, Redmond (US); Atkinson, Robert G., 98052, Redmond (US)
(74) Representative: Grünecker, Kinkeldey, Stockmair & Schwanhäusser Anwaltssozietät

(57) **Abstract**

The present invention utilizes existing encapsulation or encoding mechanisms for embedding user profile information in electronic messages. Such information may then be distributed amid a community of users for which an individual, organization or other entity interact. The present invention takes advantage of hidden fields, i.e., machine readable fields that contain metadata that by default are not presented at client user interface, for including the user profile information. The user profiles may be stored in a repository of user profiles, wherein a recipient of the user profiles may subsequently query the repository using keywords for accessing desired information about individuals or organizations for which they interact with.

## Description

### CROSS-REFERENCE TO RELATED APPLICATIONS

N/A

### BACKGROUND OF THE INVENTION

### 1. The Field of the Invention

The present invention generally relates to electronic messaging systems. More specifically, the present invention provides for publishing and utilizing user profile information amid a community of individuals that interact with one another via electronic messages.

### 2. Background and Related Art

Computerized systems provide many advantages towards peoples' ability to perform tasks. Indeed, the computer's systems ability to process information has transformed the way we live and work. Computing systems now take a wide variety of forms including desktop computers, laptop computers, tablet PCs, personal digital assistance (PDAs), and the like. Even household devices (such as refrigerators, ovens, sewing machines, security systems, and the like) have varying levels of processing capability and thus may be considered computing systems. Processing capabilities continue to be incorporated into devices that traditionally did not have such processing power. Accordingly, the diversity trend of computing systems will likely increase.

Along with computing systems, the Internet has revalutionized the way people communicate and has ushered in a new era in human history often termed the "information age." In essence, the Internet includes a large constellation of networked computers that are spread out over much of the world. Sophisticated computers, software and networking technology have made communication over the Internet fairly straight forward from the view point of the end user.

With the advent of the Internet, electronic messaging systems (e.g., email, messaging boards, instant messaging (IM), etc.) have become an increasingly popular way to communicate. For example, businesses increasingly rely on electronic messages to share ideas, transmit documents, schedule meetings, and perform a multitude of other every day tasks. Further, individuals utilize messaging systems to communicate and interact with family, friends, business associates, acquaintances, or any other desired individuals within ones interactive community. Accordingly, such electronic messaging systems have expanded the notion of a community far beyond any particular geographical location.

Within such interactive communities, often times it is desirable to exchange user profile information. For example, individuals and businesses may desire to exchange contact information for people, groups, organizations, businesses, households, or any other identifiable entity for which they interact with. Such information may include, for example, the names, alias, telephone numbers, email addresses, instant messaging (IM) addresses, home addresses, Web addresses of a contact, IP addresses for alternate deliver schemes, public keys, current projects, schedule availability, etc. Further, individuals or businesses may wish to have other user profile information distributed or published amid the community in which they interact such as hobbies, occupational specialties, affiliations, services provided, merchandise sold, etc.

Typically, in order for a user to store and utilize such user profile information, the user must manually input such information into, e.g., a contact management system. Such manual process, however, is very labor intensive and subject to human error. Further, there is no way to validate the authenticity of the data because such data is spoofable by other sources. Of course, one solution to the manual process could be to provide a centralized storage database where individuals could publish user profile information similar to yellow or white page database systems. Such centralized storage, however, would be expensive to maintain and the information contained therein would extend beyond a users interactive community. Further, similar to the manual process, users would not know the validity of the user profile information provided therein. Accordingly, there exists a need to litter or publish user profile information amid a community of individuals that interact with one another via electronic messages, without having to have a central database for storing and accessing such information.

### BRIEF SUMMARY OF THE INVENTION

The above-identified deficiencies and draw backs of current user profile systems or ways of publishing and accessing user profile information are overcome through exemplary embodiments of the present invention. For example, in a messaging system, the present invention provides for publishing profile information amid a community of individuals that interact with one another via electronic messages.

Exemplary embodiments provide for generating an electronic message to be sent from a sender to a recipient. The electronic message includes one or more fields for message data that is to be presented at a messaging client user interface. Further, the electronic message includes at least one machine readable field for including metadata that by default is not presented at the messaging client user interface. A user profile including metadata about characteristics of the sender may be accessed, whereupon at least a portion of the user profile is automatically encoded into the at least one machine readable field of the electronic message. The electronic message that includes the at least a portion of the user profile is then sent to the recipient for subsequent use thereof.

Other example embodiments provide for utilizing user profile information received through electronic message interactions, without having to have a central database for storing and accessing such information. An electronic message may be received, which includes one or more fields for message data that is to be presented at a messaging client user interface. Further, the electronic message includes at least one machine readable field for including metadata that by default is not presented at the messaging client user interface. The at least one machine readable field includes a user profile, which is metadata about characteristics of a sender of the electronic message. The user profile is then stored in a repository of user profiles for subsequent use in querying of desired information.

Still other example embodiments provide for a method of assisting a recipient in verifying user profile information received through electronic message interactions with a sender. A plurality of electronic messages may be received, each including one or more fields for message data that is to be presented at a messaging client user interface. Further, the plurality of electronic messages each include at least one machine readable field for including metadata that by default is not presented at the messaging client user interface. Each of the at least one machine readable fields includes a user profile, which is metadata about characteristics of a sender of the plurality of electronic messages. Each user profile is then compared with one another for validating the consistency thereof. Based upon the comparison, a confidence level is generated that indicates whether or not the user profiles within the plurality of messages are from the sender.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1A illustrates a messaging system in which user profile information may be published in accordance with exemplary embodiments of the present invention;

Figure 1B illustrates a messaging system in which user profile information can be validated and stored for subsequent use in accordance with exemplary embodiments of the present invention;

Figure 2 illustrates an example flow chart of a method of publishing user profile information in accordance with exemplary embodiments of present invention;

Figure 3 illustrates a flow chart of a method of utilizing user profile information received through electronic message interactions in accordance with exemplary embodiments of the present invention;

Figure 4 illustrates a flow chart of a method of assisting a recipient in verifying user profile information received through electronic message interactions in accordance with exemplary embodiments of present invention; and

Figure 5 illustrates an example system that provides a suitable operating environment for the present invention.

### DETAILED DESCRIPTION OF THE PREFERRED EMBODIMENTS

The present invention extends to methods, systems and computer program products for publishing and utilizing user profile information about individual or entity of an electronic message system community. The embodiments of the present invention may comprise a special purpose or general-purpose computer including various computer hardware, as discussed in greater detail below.

The present invention utilizes existing encapsulation or encoding mechanisms for embedding or encoding user profile information in electronic messages. Such information may then be distributed amid a community of users for which an individual, organization or other entity interact. Example embodiments take advantage of hidden fields, i.e., machine readable fields that contain metadata that by default are not presented at a client user interface, for including user profile information. The user profile including any one of a name, alias, home address, phone number, email address, IP address for alternate deliver schemes, occupational preference, hobbies, services provided, goods provided, instant messaging (IM) addresses, Web addresses of a contact, public keys, current projects, schedule availability, or any other information an individual or organization desires to be published amongst the interactive community. Other example embodiments further provide for validating such user profiles, whereupon the user profiles may be stored in a repository of user profiles. The recipient may subsequently query the repository using keywords for accessing desired information about individuals and/or organizations for which they interact.

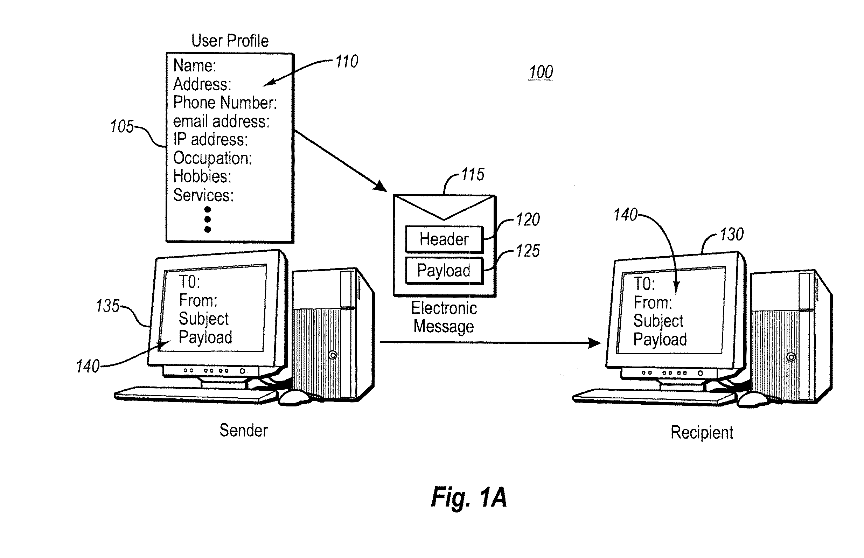

Figure 1A illustrates some of the example embodiments described above and provides a messaging system 100 that utilizes hidden fields within an electronic message for sending or publishing user profile information. Utilizing existing encapsulation mechanisms, e.g., Simple Mail Transfer Protocol (SMTP), X.400 P2, Multipurpose Internet Mail Extensions (MIME), Direct Internet Messaging Encapsulation (DIME), or extensible Markup Language (XML) protocols such as Simple Object Access Protocol (SOAP), an electronic message 115 may be generated that includes a header 120 and a payload 125. As shown in the user interface 140 for both the sender 135 and the recipient 130, portions of the header 120 and the payload 125 are typically by default presented at the client user interface 140. For example, when recipient 130 receives a message, or when sender 135 is generating a message, typical fields that are shown include such fields as TO:, FROM:, SUBJECT:, and the message itself. Existing protocols also provide for hidden fields (not shown) within the message 115 that may include metadata that by default is not presented at the messaging client user interface 140. Although such hidden fields may be able to be accessed and the information displayed through some extensive user input and interaction with the client, typically such fields are considered hidden because they are not by default displayed to the sender 135 or the recipient 130.

Example embodiments utilize one or more of these hidden fields to publish and distribute user profile information 105 amid a community of individuals that interact with each other. For example, as shown, a user profile 105 is provided that includes metadata 110 about characteristics of the sender 135. As previously stated, the user profile may include such information as a sender's 135's name, alias, home address, phone number, email address, IP address for alternate deliver schemes, occupational preference, hobbies, services provided, goods provided, IM addresses, Web addresses of a contact, public keys, current projects, schedule availability, or any other information an individual or organization desires to be published amongst the interactive community. When the electronic message 115 is sent from the sender 135 to the recipient 130 the user profile 105 is automatically encoded into the hidden field. As one would recognize, the user profile 105 may be included within the hidden field of electronic message 115 either before or at the time the message 115 is sent. Accordingly, the timing of inserting the user profile 105 into the hidden field should not limit or otherwise narrow the scope of the present invention.

Other exemplary embodiments provide that multiple user profiles 105 may be included in the electronic message 115 in the hidden fields thereof. For example, a message may be received by the sender 135 that already has user profile information associated therewith. Upon forwarding the electronic message 115 to the recipient 130, the sender's 135's user profile 105 may also be added within the electronic message 115 and sent to the recipient 130 via any will known transport protocol, e.g., SMTP, IM protocols, etc. Alternatively, or in conjunction, user profile information may be included in the message 115 about other members of the community that are not directly involved in the current message interaction. For example, the sender's 135's client may litter the message 115 with all user profile information it has for others in the community or any subset thereof.

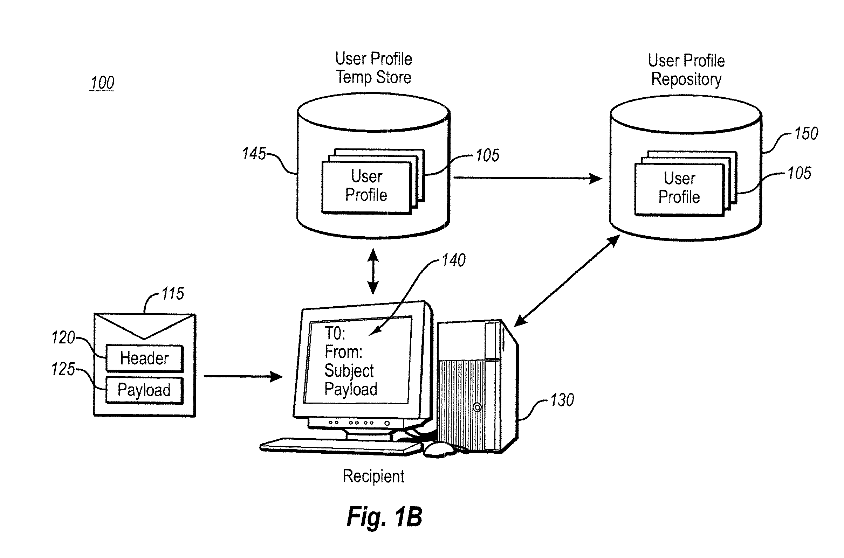

Figure 1B illustrates a messaging system 100 that can receive and utilize the user profile information 105 in accordance with exemplary embodiments of the present invention. For example, recipient 130 may receive message 115 that includes the user profile 105 in a hidden message field, i.e., a field that is machine readable and includes metadata that by default is not presented at the recipient 135 client user interface 140. As user profiles 105 are received the recipient 130 may store such user profiles 105 in a user profile temp store 145 until the information therein can be validated.

As one would recognize, there are numerous ways in which the user profiles 105 may be validated. For example, the validation may be based on a social interaction of the content within the message 115. For example, if the recipient 130 has had recent communications with the sender 135 outside the messaging system 100, such communications are not easily spoofed. Accordingly, if the sender 140 includes a reference to such communication, then the recipient 130 may be able to validate the user profile 110 based on such social interaction information within the message 115. An example of such social interaction may be that the recipient 130 met the sender 135 at a coffee shop and they had a conversation. When the sender 135 sends an electronic message 115 to the recipient 130, she may include a reference to the conversation and/or their meeting at the coffee shop. Upon remembering the conversation, the recipient 130 can validate the user profile 105 with a high degree of certainty that the sender 135 is who they say they are. As will be described in greater detail below, the validation may further be strengthened through consistency of signatures applied to the metadata 105 allowing, e.g., social context to be proven to be the same across multiple messages.

Other example embodiments provide for validating the consistency of the user profile 105 through multiple electronic message communications between the sender 135 and the recipient 130. For example, the user profile information 110 within multiple messages received can be compared, wherein the higher the number of messages 115 received with matching user profiles 105 yields a higher probability that the user profiles 105 are valid. Further, as mentioned above, the user profile 105 may be electronically signed by one of public/private key, basic HTTP, windows NTML, Kerberos, X.509 certificate, passport, MAC based authentication, or any other well known method for digitally signing data. Such signing may be based on a private key generated randomly by the sending client 135, but held indefinitely by the client to prove consistency. In such instance, a public key matches the signatures applied for validating the consistency of the user profile 105. Regardless, however, of how such signatures are compared, the more times that the signature can be validated the higher probability that the user profile 105 is authentic. Based on some threshold or confidence level that the user profile is valid, the user profile 105 may be sent to the user profile repository 150 for subsequent use in querying by the recipient 130.

Of course other methods of validating the user profile 105 may be available to the present invention. For example, as mentioned above, a combination of the social interaction with the sender 135 and the comparison of the user profile information 110 and signature may also be available. For instance, after comparing the user profiles 105 and/or signatures associated therewith, a prompt may be given to the recipient 130 indicating the consistency of the user profile 105. Further, the prompt may ask the recipient 130 whether or not the recipient wishes to add the user profile 105 to the user profile repository 150. Upon receiving user input from the recipient 130, the user profile 105 (or a portion thereof) can be transferred from the user profile temp store 145 to the repository 150. Alternatively, the user profile 105 may be deleted as desired by the recipient 130.

Of course as one would recognize, there are still other methods of validating the sender 135 and the user profile 105 available to the present invention. Accordingly, the above examples for validating the sender 135 and user profile information 110 are used for illustrative purposes only and are not meant to limit or otherwise narrow the scope of the present invention unless explicitly claimed.

Regardless of how the user profile information is validated for purposes of storing the user profile 105 in the repository 150, recipient 130 may subsequently access the repository 150 for querying purposes. For example, sender 135 may have a need for a stock broker, wherein recipient 130 having a high degree of trust in the user profiles 110 may query the repository 150 using the keywords "stock broker." As the various user profiles 105 are scanned, sender 135 may be identified as one of among many individuals whose occupation is that of a stock broker. In such instance, other user profile information 110, such as the address, phone number, or other contact information may also be presented to the recipient 130. In addition other exemplary embodiments provide that the number of interactions that the sender 135 has had with the recipient 130 may also be presented for allowing the recipient to make the most informed decision on who amid the community of interactions they most trust.

Still other exemplary embodiments provide that the user profile information 110 can be used with special instructions for subsequent electronic message communications with the sender 135. For example, the user profile 105 may include instructions that its email server limits the file size of electronic messages. In such instance, the user profile may also have instructions that tell the recipient 130 to use the IP address for alternate deliver schemes for transferring files large then a specific size. As such, large file size, e.g., image files, may be transferred over a direct connection associated with the sender's 135's IP address, wherein other data (e.g., the message itself) may be routed through the senders 135 normal server.

Of course, other instructions and information within the user profile 110 can be used for subsequent electronic communications between sender 135 and recipient 130, e.g., requiring signatures or encryption when communicating sensitive subject matter. Accordingly, the above file size requirement and use of a direct IP connection are used for illustrated purposes only and are not meant to limit or otherwise narrow the scope of the present invention unless otherwise explicitly claimed.

Other example embodiments provide for continually monitoring the user profile 105 for determining when the user profile information 110 may have changed. In particular, as subsequent messages are received from sender 135, the user profile information 110 may be compared with the corresponding user profile 105 in the repository 150 for consistency. This provides for the advantage of either recognizing when the user profile information is no longer valid, and or alerting the recipient 130 to the change thereof. In such instance, the user or recipient 130 may be notified about the inconsistency and prompted as to whether or not the user profile information 110 should be changed, updated, deleted, etc.

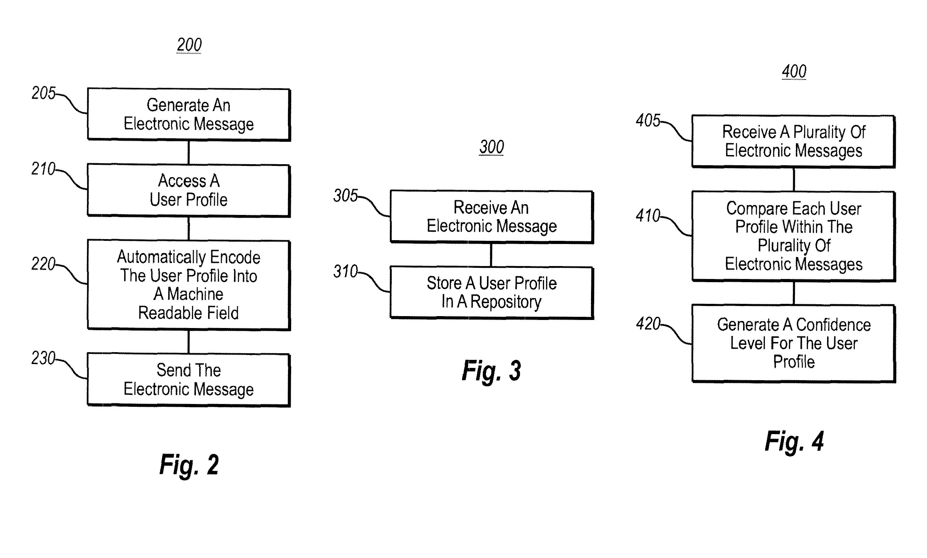

The present invention may also be described in terms of methods comprising functional steps and/or non-functional acts. The following is a description of steps and acts that may be preformed in practicing the present invention. Usually, functional steps describe the invention in terms of results that are accomplished where as non-functional acts describe more specific actions for achieving a particular result. Although the function steps and the non-functional acts may be described or claimed in any particular order, the present invention is not necessarily limited to any particular order or combination of acts and/or steps. Further, the use acts and/or steps in the recitation of the claim and in the following description of the flow charts for Figures 2-4 are used to indicate the desired specific use of such terms.

Figures 2-4 illustrate example flow charts for various embodiments of the present invention. The following description of Figures 2-4 will occasionally refer to corresponding elements form Figures 1A and 1 B. Although reference may be made to a specific element from Figures 1A and/or 1B, such elements are used for illustrated purposes only and are not meant to limit or otherwise narrow the scope of the present invention unless otherwise explicitly claimed.

Figure 2 illustrates an example flow chart of a method 200 of publishing user profile information amid a community of individuals or entities that interact with one another via electronic messages. Method 200 includes an act of generating 205 an electronic message. For example, sender 135 may generate an electronic message 115 that includes one or more fields for message data that is to be presented at a messaging client user interface 140. The electronic message 115 also includes at least one machine readable field for including metadata that by default is not presented at the messaging client user interface 140. The machine readable field may be one of a header 120 or body part of the electronic message 115. Further, the machine readable filed may be an envelope extension of the electronic message 115.

Method 200 also includes an act of accessing 210 a user profile. For example, sender's 135's client may access user profile 105, which includes metadata 110 about characteristics of the sender 135. The characteristics maybe one or more of a name, alias, home address, phone number, email address, IP address for alternate deliver schemes, occupational preference or specialty, affiliations, hobbies, services provided, goods provided, IM addresses, Web addresses of a contact, public keys, current projects, schedule availability, etc.

Method 200 further includes an act of automatically encoding 220 the user profile into a machine readable field. For example, sender 135 may utilize a standard encapsulation format for encoding the user profile 105 (or at least a portion thereof) into the machine readable field of the electronic message. The electronic message format may be MIME, DIME, or XML based. Further, the user profile 105 may be electronically signed for validating the integrity of the user profile 105 or electronic message 115. For example, sender 135 may encrypt or digitally sign the user profile 105 using public/private key, basic HTTP, Windows NTLM, Kerberos, X509 certificate, passport, MAC based authentication, etc.

Further, the electronic message 115 may include another user profile information, e.g., when forwarding the message 115 to the recipient 130. For example, the message may further include user profile encoded in at least one machine readable field for including first metadata that by default is not presented to the messaging client user interface, the first metadata including characteristics about a sender that originated a portion of the electronic message being forwarded. Alternatively, the electronic message 115 may include user profile information for members of the community that are not directly involved in the communication between the sender 135 and recipient 130.

Method 200 also includes an act of sending 230 the electronic message. For example, after sender 135 has encoded the user profile 105 information into hidden field(s) of the electronic message 115, electronic message 115 may be sent to the recipient 135 over a transport protocol such as SMTP.

Figure 3 illustrates an example flow chart of a method 300 of utilizing user profile information received through electronic message interactions, without having to have a central database for storing and accessing such information. Method 300 includes an act of receiving 305 an electronic message. For example, recipient 130 may receive electronic message 115 that includes one or more fields for message data that is to be presented at a messaging client user interface 140. The electronic message 115 also includes at least one machine readable field for including metadata that by default is not presented at the messaging client user interface 140. The at least one machine readable field including a user profile 105, which is metadata 110 about characteristics of a sender 135 of the electronic message 115. These characteristics may be one or more of a name, address, phone number, IP address for direct connectivity, occupational specialty, services provided, goods dealt in, affiliations, hobbies, etc.

Method 300 also includes an act of storing 310 the user profile in a repository. For example, the user profile 105 received may be stored in user profile repository 150 for subsequent use in querying of desired information.

Still other exemplary embodiments provide that the storing of the user profile is based on a validation of the user profile 105 as being from the sender 135 of the electronic message 115. In such instance, a second electronic message may be received that includes one or more fields for message data that is to be presented at a messaging client user interface 140 and at least one machine readable field for including metadata that by default is not presented at the messaging client user interface 140. The at least one machine readable field including second user profile 105, which is metadata about characteristics of the sender 135. The user profile 105 can then be compared with the second user profile 105 for consistency.

Other exemplary embodiments provide for presenting an indication to the recipient 130 that the user profile information within both the electronic message 115 and the second electronic message 115 has been validated for consistency. In such instance, the recipient 130 may be prompted for input on whether the recipient 130 would like to save the user profile 105 in the repository of the user profiles 150, wherein upon receiving user input the user profile 105 may be stored. Alternatively, or in addition, the received user input may be based on social interaction content within either electronic message. Alternatively, the validation of the user profile may be done automatically without user input.

Still other exemplary embodiments provide that the characteristic include a senders IP address for alternative deliver schemes and a file size requirement for communications over a normal electronic message server. Communications with file sizes greater than the requirement should be transferred to the sender's IP address for a direct connection. Accordingly, when a second electronic message is generated the user profile information may be accessed by the recipient 130, wherein it is automatically determined that the second message file size is large than the file size requirement. In such instance, a direct connection may be established with the sender's 135 IP address and at least a portion of the second electronic message may be sent over the established direct connection.

Other exemplary embodiments provide for receiving user input requesting a query of information included within the repository of user profiles 150, wherein the user profile 105 may be scanned using one or more key words as indicated by the user input. Accordingly, one or more user profiles corresponding to the one or more key words may then be identified.

Figure 4 illustrates an example flow chart of a method 400 of assisting a recipient in verifying user profile information received through electronic message interactions. Method 400 includes an act of receiving 405 a plurality of electronic messages. For example, recipient 130 may receive a plurality of message 115 each including one or more fields for message data that is to be presented at a messaging client user interface. Further, the electronic messages 115 each include at least one machine readable field for including metadata that by default is not presented at the messaging client user interface. Each of the at least one machine readable fields includes a user profile, which is metadata 110 about characteristics of a sender 135 of the plurality of electronic messages. The characteristics 110 including information similar to that described above with regards to other example embodiments.

Method 400 also includes an act of comparing 410 each user profile within the plurality of electronic messages. For example, recipient's 130's client, or some other messaging component, may compare user profiles 105 for validating the consistency thereof. Based upon the comparison, method 400 further includes an act of generating 420 a confidence level for the user profile. For example, based upon comparison of each of the user profiles 105 and/or based on the consistency of signatures associated therewith, a confidence level that the user profiles within the plurality of messages is from the sender 135 may be generated. Further, based on the confidence level, the user profile 105, or a portion thereof, may be stored in a repository 150 of user profiles for subsequent use in query of the desired information. Further, this confidence level may be presented to the user wherein the act of storing is further based on user input. Alternatively, the act of storing may be automatically done based on the confidence level.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

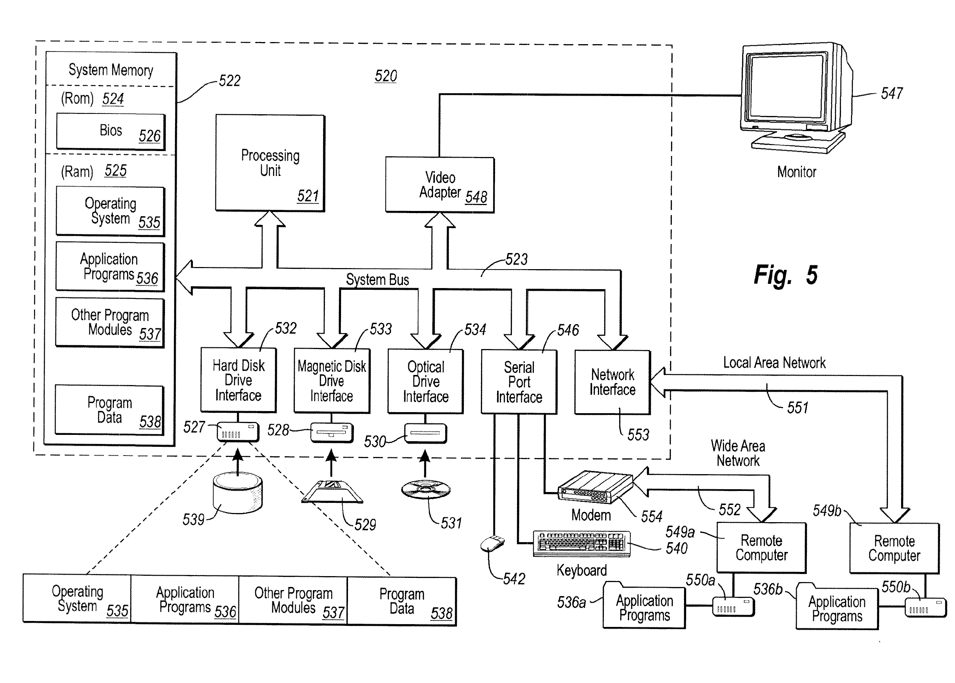

Figure 5 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 5, an exemplary system for implementing the invention includes a general purpose computing device in the form of a conventional computer 520, including a processing unit 521, a system memory 522, and a system bus 523 that couples various system components including the system memory 522 to the processing unit 521. The system bus 523 may be any of several types of bus structures including a memory bus or memory controller, a peripheral bus, and a local bus using any of a variety of bus architectures. The system memory includes read only memory (ROM) 524 and random access memory (RAM) 525. A basic input/output system (BIOS) 526, containing the basic routines that help transfer information between elements within the computer 520, such as during start-up, may be stored in ROM 524.

The computer 520 may also include a magnetic hard disk drive 527 for reading from and writing to a magnetic hard disk 539, a magnetic disk drive 528 for reading from or writing to a removable magnetic disk 529, and an optical disk drive 530 for reading from or writing to removable optical disk 531 such as a CD-ROM or other optical media. The magnetic hard disk drive 527, magnetic disk drive 528, and optical disk drive 530 are connected to the system bus 523 by a hard disk drive interface 532, a magnetic disk drive-interface 533, and an optical drive interface 534, respectively. The drives and their associated computer-readable media provide nonvolatile storage of computer-executable instructions, data structures, program modules and other data for the computer 520. Although the exemplary environment described herein employs a magnetic hard disk 539, a removable magnetic disk 529 and a removable optical disk 531, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk 539, magnetic disk 529, optical disk 531, ROM 524 or RAM 525, including an operating system 535, one or more application programs 536, other program modules 537, and program data 538. A user may enter commands and information into the computer 520 through keyboard 540, pointing device 542, or other input devices (not shown), such as a microphone, joy stick, game pad, satellite dish, scanner, or the like. These and other input devices are often connected to the processing unit 521 through a serial port interface 546 coupled to system bus 523. Alternatively, the input devices may be connected by other interfaces, such as a parallel port, a game port or a universal serial bus (USB). A monitor 547 or another display device is also connected to system bus 523 via an interface, such as video adapter 48. In addition to the monitor, personal computers typically include other peripheral output devices (not shown), such as speakers and printers.

The computer 520 may operate in a networked environment using logical connections to one or more remote computers, such as remote computers 549a and 549b. Remote computers 549a and 549b may each be another personal computer, a server, a router, a network PC, a peer device or other common network node, and typically include many or all of the elements described above relative to the computer 520, although only memory storage devices 550a and 550b and their associated application programs 536a and 536b have been illustrated in Figure 5. The logical connections depicted in Figure 5 include a local area network (LAN) 551 and a wide area network (WAN) 552 that are presented here by way of example and not limitation. Such networking environments are commonplace in office-wide or enterprise-wide computer networks, intranets and the Internet.

When used in a LAN networking environment, the computer 520 is connected to the local network 551 through a network interface or adapter 553. When used in a WAN networking environment, the computer 520 may include a modem 554, a wireless link, or other means for establishing communications over the wide area network 552, such as the Internet. The modem 554, which may be internal or external, is connected to the system bus 523 via the serial port interface 546. In a networked environment, program modules depicted relative to the computer 520, or portions thereof, may be stored in the remote memory storage device. It will be appreciated that the network connections shown are exemplary and other means of establishing communications over wide area network 552 may be used.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

## Claims

1. In a messaging system, a method of publishing user profile information amide a community of individuals that interact with one another via electronic messages, the method comprising acts of:
generating an electronic message to be sent from a sender to a recipient, the electronic message including one or more fields for message data that is to be presented at a messaging client user interface and at least one machine readable field for including metadata that by default is not presented at the messaging client user interface;
accessing a user profile, which includes metadata about characteristics of the sender;
automatically encoding at least a portion of the user profile into the at least one machine readable field of the electronic message; and
sending the electronic message that includes the at least a portion of the user profile to the recipient for subsequent use thereof.

2. The method of claim 1, wherein the electronic message format is chosen from MIME, DIME or XML based.

3. The method of claim 1, wherein the transport protocol is SMTP or X.400.

4. The method of claim 1, wherein the user profile is electronically signed for validating the integrity of the electronic message using one of a public/private key pair, basic HTTP, Windows NTLM, Kerberos, X509 certificate, passport or MAC based authentication.

5. The method of claim 1, wherein the electronic message is generated based on a forwarding command, and wherein the electronic message further includes a first user profile encoded in at least one machine readable field for including first metadata that by default is not presented at the messaging client user interface, the first metadata including characteristics about a sender that originated a portion of the electronic message being forwarded.

6. The method of claim 6, wherein the characteristics are one or more of a name, alias, home address, phone number, email address, IP address for alternate deliver schemes, occupational preference or specialty, affiliations, hobbies, services provided, goods provided, IM addresses, Web addresses of a contact, public keys, current projects or schedule availability.

7. The method of claim 1, wherein the machine readable field is a header of the electronic message or a body part of the electronic message.

8. In a message system for communicating messages amid a community of users, a method of utilizing user profile information received through electronic message interactions, without having to have a central database for storing and accessing such information, the method comprising acts of:
receiving an electronic message including one or more fields for message data that is to be presented at a messaging client user interface and at least one machine readable field for including metadata that by default is not presented at the messaging client user interface, the at least one machine readable field including a user profile, which is metadata about characteristics of a sender of the electronic message;
storing the user profile in a repository of user profiles for subsequent use in querying of desired information.

9. The method of claim 8, wherein the act of storing is based on a validation of the user profile as being from the sender of the electronic message, and wherein the validation comprises acts of:
receiving a second electronic message including one or more fields for message data that is to be presented at a messaging client user interface and at least one machine readable field for including metadata that by default is not presented at the messaging client user interface, the at least one machine readable field including a second user profile, which is metadata about characteristics of the sender; and
comparing the user profile with the second user profile for consistency.

10. The method of claim 9, wherein the act of validating further comprising an act of:
presenting an indication to a recipient of both the electronic message and the second electronic message that the user profile and the second user profile for the sender has been validated for consistency.

11. The method of claim 10, further comprising acts of:
prompting the recipient for input on whether the recipient would like to save the user profile in the repository of user profiles; and
receiving user input to store the user profile in the repository of user profiles.

12. The method of claim 11, wherein the received user input for storing the user profile is further based on social interaction content within either the electronic message or the second electronic message.

13. The method of claim 9, wherein based on the consistency of the user profile with the second user profile, the user profile is automatically stored in the repository of user profiles.

14. The method of claim 9, wherein the user profile and second user profile are electronically signed, and wherein the act of comparing the user profile with the second user profile further includes comparing the electronic signatures for consistency.

15. The method of claim 14, wherein the user profile is electronically signed for validating the integrity of the electronic message using one of a public/private key pair, basic HTTP, Windows NTLM, Kerberos, X509 certificate, passport or MAC based authentication.

16. The method of claim 8, wherein the electronic message has user profile information for a plurality of senders not involved in sending the electronic message.

17. The method of claim 8, wherein the characteristics include a sender's IP address for alternative delivery schemes and a file size requirement for communications over a normal electronic message server, such that communications with file size greater than the requirement should be transferred to the sender's IP address for a direct connection, the method further comprising acts of:
generating a second electronic message;
accessing the user profile;
automatically determining that the second electronic message file size is larger than the file size requirement;
establishing a direct connection with the sender's IP address; and
sending at least a portion of the second electronic message over the established direct connection.

18. The method of claim 8, wherein the characteristics are one or more of a name, alias, home address, phone number, email address, IP address for alternate deliver schemes, occupational preference or specialty, affiliations, hobbies, services provided, goods provided, IM addresses, Web addresses of a contact, public keys, current projects or schedule availability.

19. The method of claim 8, wherein the machine readable field is an envelope extension of the message.

20. The method of claim 8, further comprising the acts of:
receiving user input requesting a query of information included within the repository of user profiles;
scanning the user profiles using one or more keywords as indicated by the user input; and
identifying one or more user profiles corresponding to the one or more keywords.

21. In a message system for communicating messages amid a community of users, a method of assisting a recipient in verifying user profile information received through electronic message interactions with a sender, the method comprising acts of:
receiving a plurality of electronic messages each including one or more fields for message data that is to be presented at a messaging client user interface and each including at least one machine readable field with metadata that by default is not presented at the messaging client user interface, each of the at least one machine readable field including a user profile, which is metadata about characteristics of a sender of the plurality of electronic messages;
comparing each of the user profiles within the plurality of electronic messages for validating the consistency thereof; and
based on the comparison, generating a confidence level that the user profiles within the plurality of messages are from the sender.

22. The method of claim 21, further comprising an act of:
based on the confidence level, storing one of the user profiles within the plurality of messages in a repository of user profiles for subsequent use in querying of desired information.

23. The method of claim 22, wherein the confidence level is presented to the user and the act of storing is further based on user input.

24. The method of claim 22, wherein the act of storing is automatically done based on the confidence level.

25. The method of claim 24, wherein the confidence level is further based on the consistency of a digital signature associated with each of the user profiles for the plurality of messages.

26. The method of claim 22, wherein another message is received with a user profile for the sender different from the user profiles, and wherein the recipient is prompted to update user profile information stored for the sender.

27. In a messaging system, a computer program product for implementing a method of publishing user profile information amide a community of individuals that interact with one another via electronic messages, the computer program product comprising one or more computer readable media having stored thereon computer executable instructions that, when executed by a processor, can cause the messaging system to perform the following:
generate an electronic message to be sent from a sender to a recipient, the electronic message including one or more fields for message data that is to be presented at a messaging client user interface and at least one machine readable field for including metadata that by default is not presented at the messaging client user interface;
access a user profile, which includes metadata about characteristics of the sender;
automatically encode at least a portion of the user profile into the at least one machine readable field of the electronic message; and
send the electronic message that includes the at least a portion of the user profile to the recipient for subsequent use thereof.

28. The computer program product of claim 27, wherein the electronic message format is chosen from MIME, DIME or XML based.

29. The computer program product of claim 27, wherein the user profile is electronically signed for validating the integrity of the electronic message using one of a public/private key pair, basic HTTP, Windows NTLM, Kerberos, X509 certificate, passport or MAC based authentication.

30. The computer program product of claim 27, wherein the electronic message further includes user profile information for a plurality of individuals within the community that are not associated with the electronic message.

31. The computer program product of claim 30, wherein the characteristics are one or more of a name, alias, home address, phone number, email address, IP address for alternate deliver schemes, occupational preference or specialty, affiliations, hobbies, services provided, goods provided, IM addresses, Web addresses of a contact, public keys, current projects or schedule availability.

32. The computer program product of claim 27, wherein the machine readable field is an envelope extension of the message.

33. In a message system for communicating messages amid a community of users, a computer program product for implementing a method of utilizing user profile information received through electronic message interactions, without having to have a central database for storing and accessing such information, the computer program product comprising one or more computer readable media having stored thereon computer executable instructions that, when executed by a processor, can cause the messaging system to perform the following:
receive an electronic message including one or more fields for message data that is to be presented at a messaging client user interface and at least one machine readable field for including metadata that by default is not presented at the messaging client user interface, the at least one machine readable field including a user profile, which is metadata about characteristics of a sender of the electronic message;
store the user profile in a repository of user profiles for subsequent use in querying of desired information.

34. The computer program product of claim 33, wherein the act of storing is based on a validation of the user profile as being from the sender of the electronic message, and wherein the computer program product further comprising computer executable instructions that can cause the messaging system to perform the following:
receive a second electronic message including one or more fields for message data that is to be presented at a messaging client user interface and at least one machine readable field for including metadata that by default is not presented at the messaging client user interface, the at least one machine readable field including a second user profile, which is metadata about characteristics of the sender; and
compare the user profile with the second user profile for consistency.

35. The computer program product of claim 34, further comprising computer executable instructions that can cause the messaging system to perform the following:
present an indication to a recipient of both the electronic message and the second electronic message that the user profile and the second user profile for the sender has been validated for consistency.

36. The computer program product of claim 35, further comprising computer executable instructions that can cause the messaging system to perform the following:
prompt the recipient for input on whether the recipient would like to save the user profile in the repository of user profiles; and
receive user input to store the user profile in the repository of user profiles.

37. The computer program product of claim 36, wherein the received user input for storing the user profile is further based on social interaction content within either the electronic message or the second electronic message.

38. The computer program product of claim 34, wherein the user profile and second user profile are electronically signed, and wherein the act of comparing the user profile with the second user profile further includes comparing the electronic signatures for consistency.

39. The computer program product of claim 34, wherein the characteristics include a sender's IP address for alternative delivery schemes and a file size requirement for communications over a normal electronic message server, such that communications with file size greater than the requirement should be transferred to the sender's IP address for a direct connection, the computer program product further comprising executable instructions that cause the messaging system to perform the following:
generate a second electronic message;
access the user profile;
automatically determine that the second electronic message file size is larger than the file size requirement;
establish a direct connection with the sender's IP address; and
send at least a portion of the second electronic message over the established direct connection.

40. The computer program product of claim 33, further comprising executable instruction that cause the messaging system to perform the following:
receive user input requesting a query of information included within the repository of user profiles;
scan the user profiles using one or more keywords as indicated by the user input; and
identifying one or more user profiles corresponding to the one or more keywords.
